# EUROPÄISCHE PATENTSCHRIFT

(11) **EP 3 055 197 B1**
(45) Veröffentlichungstag und Bekanntmachung des Hinweises auf die Patenterteilung: **27.06.2018**
(21) Anmeldenummer: 14758940.2
(22) Anmeldetag: 04.09.2014
(51) Int. Cl.: B62M 9/10, B62M 6/45

(54) **MOTORISCH UND MIT MUSKELKRAFT BETREIBBARES FAHRZEUG MIT GANGWECHSEL-UNTERSTÜTZUNG**
VEHICLE THAT CAN BE OPERATED BY MOTOR AND BY MUSCLE POWER HAVING GEAR-CHANGE ASSISTANCE
VÉHICULE POUVANT ÊTRE ACTIONNÉ PAR MOTEUR ET PAR LA FORCE MUSCULAIRE, MUNI D'UN SYSTÈME D'ASSISTANCE AU CHANGEMENT DE VITESSE

(30) Priorität: 08.10.2013 DE 102013220293
(43) Veröffentlichungstag der Anmeldung: 17.08.2016
(73) Patentinhaber: Robert Bosch GmbH, 70442 Stuttgart (DE)
(72) Erfinder: DASBACH, Gregor, 72762 Reutlingen (DE); KIMMICH, Peter, 71144 Steinenbronn (DE)
(86) Internationale Anmeldenummer: PCT/EP2014/068799
(87) Internationale Veröffentlichungsnummer: WO 2015/051954

(56) Entgegenhaltungen:
- EP-A1- 0 856 461
- EP-A2- 2 172 391
- EP-A2- 2 423 095
- WO-A1-2010/073099
- DE-A1-102010 017 412
- US-A- 5 609 536

## Beschreibung

### Stand der Technik

Die vorliegende Erfindung betrifft eine motorisch und/oder mit Muskelkraft betreibbares Fahrzeug mit einer Gangwechsel-Unterstützungsvorrichtung, beansprucht im Anspruch 1, sowie ein Verfahren zum Betreiben eines derartigen Fahrzeugs für einen verbesserten Gangwechsel, beansprucht im Anspruch 10. Elektrofahrräder sind aus dem Stand der Technik in unterschiedlichen Ausgestaltungen bekannt. Allgemein werden bei Fahrrädern mit Kettenschaltungen bei Mehrfach-Kettenblättern sogenannte "Steighilfen" verwendet, welche beim Schalten auf ein größeres Kettenblatt die Kette mitnehmen und den Übergang vom kleineren auf das größere Kettenblatt erleichtern. Diese Steighilfen sind an vorgegebenen Positionen auf dem größeren Kettenblatt angeordnet. Bei mehreren Kettenblättern am Kurbeltrieb sind dabei die Positionen der Steighilfen fest zu den Positionen der Pedale. Die Steighilfen sind hierbei üblicherweise derart angeordnet, dass bei einem Schaltvorgang möglichst immer ein minimales Kurbeldrehmoment vom Fahrer erzeugt wird. Bei Elektrofahrrädern ergibt sich nun das Problem, dass Pedalstellung und Lage des Kettenblatts zueinander nicht mehr eindeutig feststehen, da beide Teile durch einen Freilauf getrennt sind. Dadurch ergibt sich jedoch insbesondere bei mehreren Kettenblättern am Kurbeltrieb ein erhöhter Verschleiß beim Schaltvorgang. Die DE-A-10 2010 017 412 offenbart ein Fahrzeug mit den vorkennzeichnenden Merkmalen des Anspruchs 1.

### Offenbarung der Erfindung

Das erfindungsgemäße mit Motorkraft und/oder Muskelkraft betreibbare Fahrzeug, insbesondere Elektrofahrrad, mit den Merkmalen des Anspruchs 1 weist demgegenüber den Vorteil auf, dass eine Schaltunterstützung bei jedem Schaltvorgang des Fahrzeugs bereitgestellt werden kann und somit ein Verschleiß von Zahnrädern und Kette des Fahrzeugs signifikant reduziert werden kann. Insbesondere ermöglicht die Erfindung auch die Verwendung von mehreren Kettenblättern mit unterschiedlichen Zähnezahlen am Kurbeltrieb des Fahrzeugs, ohne dass auch bei motorischer Unterstützung des Fahrers ein zu hohes Drehmoment beim Schaltvorgang anliegt. Dies wird erfindungsgemäß dadurch erreicht, dass das Fahrzeug neben einem elektrischen Antrieb und einer Stromversorgung eine Kette, einen Kurbeltrieb und eine Gangschaltung mit wenigstens einem ersten und einem zweiten Zahnrad sowie einer Kettenübergabe-Unterstützungseinrichtung aufweist. Diese Kettenübergabe-Unterstützungseinrichtung ist an einem der Zahnräder angeordnet und unterstützt bei einem Gangwechsel eine Übergabe der Kette vom ersten auf das zweite Zahnrad. Die Kettenübergabe-Unterstützungseinrichtung ist vorzugsweise z.B. ein seitlich am Zahnrad vorstehendes Element, über welches die Kette beim Gangwechsel mitläuft. Erfindungsgemäß ist eine Steuereinheit vorgesehen, welche den elektrischen Antrieb ansteuert, wobei die Steuereinheit eingerichtet ist, bei einem Gangwechsel den elektrischen Antrieb anzutreiben. Dabei wird die Kette derart bewegt, dass die Kettenübergabe-Unterstützungseinrichtung in eine Gangwechsel-Position gebracht wird, in welcher die Kettenübergabe-Unterstützungseinrichtung den Gangwechsel optimal unterstützt.

Die Unteransprüche zeigen bevorzugte Weiterbildungen der Erfindung.

Besonders bevorzugt sind die Kettenübergabe-Unterstützungseinrichtungen an einem der Zahnräder, insbesondere seitlich eines Zahnrads, angeordnet. Dadurch kann eine einfach aufgebaute und wirksame Unterstützung beim Gangwechsel bereitgestellt werden.

Weiter bevorzugt umfasst das Fahrzeug einen Sensor, welcher eine Gangwechselabsicht des Fahrers erfasst. Der Sensor meldet die Gangwechselabsicht des Fahrers an die Steuereinheit, welche dann ein Signal für den elektrischen Antrieb generiert, um die Kettenübergabe-Unterstützungseinrichtung in die Gangwechselposition zu bringen.

Besonders bevorzugt umfasst das Fahrzeug eine manuelle Schalteinrichtung und der Sensor zur Erfassung der Gangwechselabsicht ist an der vom Fahrer betätigbaren manuellen Schalteinrichtung angeordnet. Die manuelle Schalteinrichtung ist beispielsweise ein Schalthebel oder ein Schaltdrehgriff.

Weiter bevorzugt umfasst das Fahrzeug einen elektrischen Aktuator zur Betätigung der Gangschaltung. Vorzugsweise ist dabei das an den elektrischen Aktuator erzeugte Signal zum Gangwechsel auch das Signal für den elektrischen Antrieb, die Kettenübergabe-Unterstützungseinrichtung in die Gangwechselposition zu bringen.

Besonders bevorzugt sind das erste und zweite Zahnrad der Gangschaltung am Kurbeltrieb des Fahrzeugs angeordnet. Hierbei bilden die beiden Zahnräder somit zwei Kettenblätter mit unterschiedlicher Zähnezahl, wobei eine Kette beispielsweise mittels eines Frontumwerfers zwischen den beiden Kettenblättern wechseln kann.

Weiter bevorzugt umfasst das Fahrzeug einen Freilauf, welcher zwischen dem Ausgang der Kurbel und einem Kettenblatt, welches sich mit der Kette im Eingriff befindet, vorgesehen ist. Besonders bevorzugt ist der Freilauf dabei schaltbar vorgesehen, d.h., der Fahrer kann z.B. mittels eines Schalters bestimmen, ob der Freilauf aktiviert sein soll oder nicht.

Gemäß einer weiteren bevorzugten Ausgestaltung der vorliegenden Erfindung ist der elektrische Antrieb im Bereich des Kurbeltriebs angeordnet. Dadurch kann beispielsweise bei einem Elektrofahrrad ein relativ tiefer Schwerpunkt erreicht werden. Auch kann eine schnelle in Position bringen der Kettenübergabe-Unterstützungseinrichtung erreicht werden.

Ferner betrifft die vorliegende Erfindung ein Verfahren zum Betreiben eines motorisch und/oder mit Muskelkraft betreibbaren Fahrzeugs, z.B. eines Elektrofahrrads. Das Fahrzeug umfasst einen elektrischen Antrieb, eine Stromversorgung, eine Gangschaltung mit erstem und zweiten Zahnrad und einer Kettenübergabe-Unterstützungseinrichtung, eine Kette, einen Kurbeltrieb, sowie eine Steuereinheit, um den elektrischen Antrieb anzusteuern. Die Kettenübergabe-Unterstützungseinrichtung ist dabei an einem Zahnrad angeordnet. Das Verfahren umfasst dabei die Schritte des Erfassens einer Gangwechselabsicht und des Antreibens des elektrischen Antriebs, um die Kette zu bewegen, so dass die Kettenübergabe-Unterstützungseinrichtung in eine Gangwechselposition gebracht wird, in welcher ein Gangwechsel durch die Kettenübergabe-Unterstützungseinrichtung unterstützt wird.

### Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische Ansicht eines Fahrzeugs gemäß einer bevorzugten Ausführungsform der Erfindung; und
- Figur 2: eine schematische Darstellung einer erfindungsgemäßen Kettenblattanordnung mit zwei Kettenblättern.

### Bevorzugte Ausführungsform der Erfindung

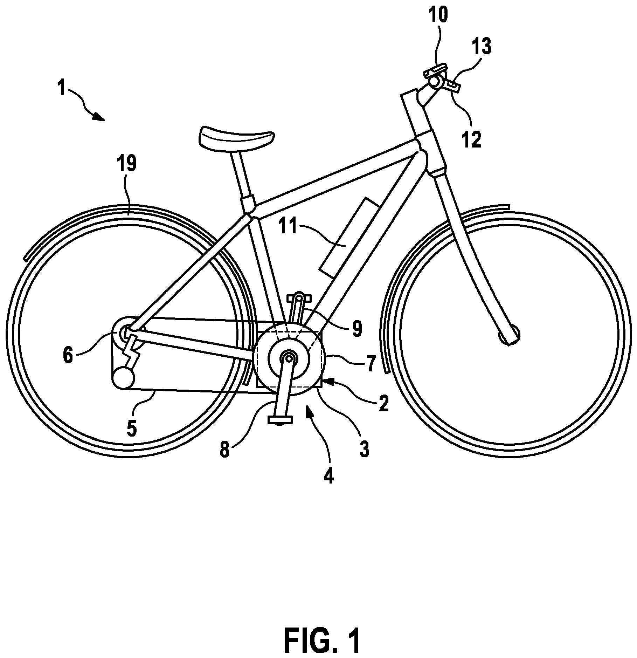

Figur 1 zeigt ein Elektrofahrrad 1 gemäß einem bevorzugten Ausführungsbeispiel der Erfindung.

Das erfindungsgemäße Elektrofahrrad 1 umfasst einen Kurbeltrieb 2 sowie einen elektrischen Antrieb 3, welcher im Bereich des Kurbeltriebs angeordnet ist. Ferner umfasst das Elektrofahrrad 1 eine Gangschaltung 4 mit einer Kette 5, einer Vielzahl von Ritzeln 6 an einem Hinterrad 19 sowie eine vordere Schaltung mit einer Kettenblattanordnung 7. Dabei umfasst die vordere Schaltung als Kettenblätter zwei Zahnräder 7a, 7b.

Die Bezugszeichen 8 und 9 bezeichnen Kurbeln des Kurbeltriebs 2.

Ferner ist eine Stromversorgung 11 an einem Rahmen des Elektrofahrrads vorgesehen, welche den elektrischen Antrieb 3 mit Strom versorgt.

Das Elektrofahrrad 1 umfasst ferner eine Steuereinheit 10, welche in diesem Ausführungsbeispiel am Lenker des Elektrofahrrads angeordnet ist. Am Lenker ist ferner eine Schalteinrichtung 12 angeordnet, welche manuell von einem Fahrer geschaltet wird. An der Schalteinrichtung 12 ist ein Sensor 13 vorgesehen, welcher eine Gangwechselabsicht des Fahrers erfasst. Der Sensor 13 ist mit der Steuereinheit 10 verbunden.

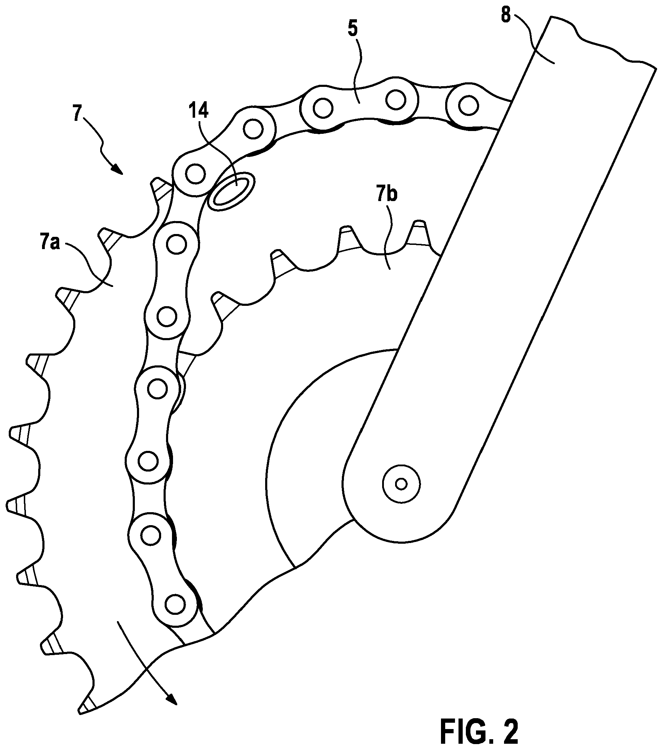

Wie aus Figur 2 ersichtlich ist, ist am größeren Zahnrad 7a eine Kettenübergabe-Unterstützungseinrichtung 14 vorgesehen, welche seitlich am Zahnrad 7a angeordnet ist.

Die Kettenblatt-Unterstützungsrichtung 14 unterstützt dabei bei einem Gangwechsel, wie in Figur 2 gezeigt, eine Übergabe der Kette 5 von einem ersten, kleinen Zahnrad 7b auf ein zweites, größeres Zahnrad 7a. Dabei muss eine Position der Kettenübergabe-Unterstützungseinrichtung 14 möglichst derart angeordnet sein, dass in dieser Position ein vom Fahrer auf den Kurbeltrieb ausgeübtes Drehmoment minimal ist. Dies ist insbesondere dann der Fall, wenn eine der Kurbeln 8, 9 sich an einem unteren Totpunkt bzw. in der Nähe des unteren Totpunktes befindet.

Die Steuereinheit 10 ist nun derart eingerichtet, dass bei einem Gangwechsel, welchen der Fahrer über die Schalteinrichtung 12 initiiert, der Sensor 13 der Steuereinheit 10 ein entsprechendes Signal sendet. Die Steuereinheit 10 treibt daraufhin den elektrischen Antrieb 3 an, um die Kettenübergabe-Unterstützungseinrichtung 14 in eine Gangwechselposition zu bringen, in welche ein Gangwechsel maximal unterstützt wird. Da zwischen dem Kurbeltrieb 2 und den Kettenblättern 7 ein Freilauf (nicht gezeigt) vorhanden ist, kann dies auch dann erfolgen, wenn der Fahrer mit dem Treten aufhört bzw. das Treten verlangsamt. Der elektrische Antrieb 3 kann unabhängig von einer Pedalbetätigung durch den Fahrer die Kettenblätter 7 drehen, so dass die Kettenübergabe-Unterstützungseinrichtung 14 in eine optimale Position bringbar ist.

Erfindungsgemäß kann somit ein Verschleiß an der Kette 5 und den Kettenrädern 7 minimiert werden, da die Kettenübergabe-Unterstützungseinrichtung 14 immer in der optimalen Position zur Übergabe der Kette von den ersten auf das zweite Zahnrad positioniert ist.

Erfindungsgemäß kann somit insbesondere bei sogenannten Frontumwerfern am Kurbeltrieb eine Schaltung realisiert werden, welche mehrere Kettenblätter aufweist.

Wenn weiter bevorzugt am Kurbeltrieb 2 noch ein Drehmomentsensor angeordnet ist, kann die Steuereinheit 10 den elektrischen Antrieb 3 jeweils derart antreiben, dass der Schaltvorgang möglichst mit optimalem Drehmoment ausgeführt wird. Dabei kann die Steuereinrichtung das vom Fahrer während des Schaltvorgangs aufgebrachte Drehmoment erfassen und den fehlenden Drehmomentbetrag zum optimalen Drehmoment für den Schaltvorgang durch den elektrischen Antrieb 3 bereitstellen bzw. auch begrenzen, falls der Fahrer den Schaltvorgang mit zu viel Drehmoment durchführen möchte.

## Patentansprüche

1. Motorisch und/oder mit Muskelkraft betreibbares Fahrzeug, insbesondere Elektrofahrrad, umfassend:
- einen Kurbeltrieb (2),
- einen elektrischen Antrieb (3),
- eine Stromversorgung (11),
- eine Kette (5),
- eine Gangschaltung (4) mit wenigstens einem ersten Zahnrad (7a) und einem zweiten Zahnrad (7b) und eine Kettenübergabe-Unterstützungseinrichtung (14), welche bei einem Gangwechsel eine Übergabe der Kette vom ersten Zahnrad (7a) auf das zweite Zahnrad (7b) unterstützt, und
- eine Steuereinheit (10), um den elektrischen Antrieb (3) anzusteuern,
**dadurch gekennzeichnet dass**
- die Kettenübergabe-Unterstützungseinrichtung (14) an einem der Zahnräder angeordnet ist, und
- die Steuereinheit (10) eingerichtet ist, bei einem Gangwechsel den elektrischen Antrieb (3) anzutreiben, um die Kette (5) derart zu bewegen, dass die Kettenübergabe-Unterstützungseinrichtung (14) in eine Gangwechselposition gebracht wird, in welche ein Gangwechsel durch die Kettenübergabe-Unterstützungseinrichtung (14) unterstützt wird.

2. Fahrzeug nach Anspruch 1, **dadurch gekennzeichnet, dass** die Kettenübergabe-Unterstützungseinrichtung (14) seitlich an einem der Zahnräder (7a) als hervorstehendes Element angeordnet ist.

3. Fahrzeug nach einem der vorhergehenden Ansprüche, ferner umfassend einen Sensor (13), welcher eine Gangwechselabsicht des Fahrers erfasst.

4. Fahrzeug nach Anspruch 3, **dadurch gekennzeichnet, dass** der Sensor (13) an einer vom Fahrer betätigbaren Schalteinrichtung (12) angeordnet ist.

5. Fahrzeug nach einem der vorhergehenden Ansprüche, ferner umfassend einen elektrischen Aktuator zur Betätigung der Gangschaltung (4).

6. Fahrzeug nach Anspruch 5, **dadurch gekennzeichnet, dass** ein Signal für die Steuereinheit (10), welches die Gangwechselabsicht des Fahrers anzeigt, dass Signal des elektrischen Aktuators zum Schalten ist.

7. Fahrzeug nach einem der vorhergehenden Ansprüche, **dadurch gekennzeichnet, dass** das erste und zweite Zahnrad (7a, 7b) am Kurbeltrieb (2) angeordnet sind.

8. Fahrzeug nach Anspruch 7, ferner umfassend einen Freilauf zwischen dem Kurbeltrieb (2) und dem ersten und zweiten Zahnrad.

9. Fahrzeug nach einem der vorhergehenden Ansprüche, **dadurch gekennzeichnet, dass** der elektrische Antrieb (3) am Kurbeltrieb (2) angeordnet ist.

10. Verfahren zum Betreiben eines motorisch und/oder mit Muskelkraft betreibbaren Fahrzeugs, insbesondere eines Elektrofahrrads, mit einem Kurbeltrieb (2), einem elektrischen Antrieb (3), einer Stromversorgung (11), einer Gangschaltung (4) mit einem ersten und zweiten Zahnrad (7a, 7b) und einer Kettenübergabe-Unterstützungseinrichtung (14), einer Kette (5) und einer Steuereinheit (10), um den elektrischen Antrieb (3) anzusteuern, wobei die Kettenübergabe-Unterstützungseinrichtung (14) an einem der Zahnräder (7a, 7b) angeordnet ist, umfassend die Schritte:
- Erfassen einer Gangwechselabsicht des Fahrers, und
- Antreiben des elektrischen Antriebs (3), um die Kette (5) zu bewegen, so dass die Kettenübergabe-Unterstützungseinrichtung (14) in eine Gangwechselposition gebracht wird, in welcher ein Gangwechsel durch die Kettenübergabe-Unterstützungseinrichtung (14) unterstützt wird.

## Claims

1. Vehicle which can be operated by motor and/or by muscle power, in particular an electric bicycle, comprising:
- a crank drive (2),
- an electric drive (3),
- a power supply (11),
- a chain (5),
- a gearshift (4) having at least a first gearwheel (7a) and a second gearwheel (7b) and a chain transfer assistance device (14) which, in the case of a gear change, assists a transfer of the chain from the first gearwheel (7a) to the second gearwheel (7b), and
- a control unit (10) for actuating the electric drive (3),
**characterized in that**
- the chain transfer assistance device (14) is arranged on one of the gearwheels, and
- the control unit (10) is configured, in the case of a gear change, to drive the electric drive (3) in order to move the chain (5) in such a way that the chain transfer assistance device (14) is moved into a gear changing position in which a gear change is assisted by the chain transfer assistance device (14).

2. Vehicle according to Claim 1, **characterized in that** the chain transfer assistance device (14) is arranged as a protruding element laterally on one of the gearwheels (7a).

3. Vehicle according to one of the preceding claims, also comprising a sensor (13) which senses an intention of the driver to change gear.

4. Vehicle according to Claim 3, **characterized in that** the sensor (13) is arranged on a switch device (12) which can be activated by the driver.

5. Vehicle according to one of the preceding claims, also comprising an electrical actuator for actuating the gearshift (4).

6. Vehicle according to Claim 5, **characterized in that** a signal for the control unit (10), which signal indicates the intention of the driver to change gear, is the signal of the electrical actuator to switch.

7. Vehicle according to one of the preceding claims, **characterized in that** the first and second gearwheels (7a, 7b) are arranged on the crank drive (2).

8. Vehicle according to Claim 7, also comprising a freewheel between the crank drive (2) and the first and second gearwheels.

9. Vehicle according to one of the preceding claims, **characterized in that** the electric drive (3) is arranged on the crank drive (2).

10. Method for operating a vehicle which is operated by motor and/or by muscle power, in particular an electric bicycle, having a crank drive (2), an electric drive (3), a power supply (11), a gearshift (4) having a first and second gearwheel (7a, 7b) and a chain transfer assistance device (14), a chain (5) and a control unit (10) for actuating the electric drive (3), wherein the chain transfer assistance device (14) is arranged on one of the gearwheels (7a, 7b), comprising the steps:
- sensing an intention of the driver to change gear, and
- driving the electric drive (3) in order to move the chain (5) so that the chain transfer assistance device (14) is moved into a gear change position in which a gear change is assisted by the chain transfer assistance device (14).

## Revendications

1. Véhicule pouvant être actionné de manière motorisée et/ou par la force musculaire, notamment bicyclette électrique, comportant :
- une commande à manivelle (2),
- un mécanisme d'entraînement électrique (3),
- une alimentation électrique (11),
- une chaîne (5),
- un mécanisme de changement de rapport (4) comprenant au moins une première roue dentée (7a) et une deuxième roue dentée (7b) ainsi qu'un dispositif d'assistance de transfert de chaîne (14) qui, lors d'un changement de rapport, assiste un transfert de la chaîne de la première roue dentée (7a) à la deuxième roue dentée (7b), et
- une unité de commande (10) destinée à commander le mécanisme d'entraînement électrique (3),
**caractérisé en ce que**
- le dispositif d'assistance de transfert de chaîne (14) est disposé sur l'une des roues dentées, et
- l'unité de commande (10) est conçue pour entraîner le mécanisme d'entraînement électrique (3) lors d'un changement de rapport afin de déplacer la chaîne (5) de telle sorte que le dispositif d'assistance de transfert de chaîne (14) soit amené dans une position de changement de rapport dans laquelle un changement de rapport est assisté par le dispositif d'assistance de transfert de chaîne (14).

2. Véhicule selon la revendication 1, **caractérisé en ce que** le dispositif d'assistance de transfert de chaîne (14) est disposé latéralement sur l'une des roues dentées (7a) en tant qu'élément en saillie.

3. Véhicule selon l'une des revendications précédentes, comportant en outre un capteur (13) qui détecte une intention de changement de rapport du conducteur.

4. Véhicule selon la revendication 3, **caractérisé en ce que** le capteur (13) est disposé sur un dispositif de commutation (12) qui peut être actionné par le conducteur.

5. Véhicule selon l'une des revendications précédentes, comportant en outre un actionneur électrique destiné à actionner le mécanisme de changement de rapport (4).

6. Véhicule selon la revendication 5, **caractérisé en ce qu'**un signal pour l'unité de commande (10) qui indique l'intention de changement de rapport du conducteur est le signal de l'actionneur électrique servant au changement de rapport.

7. Véhicule selon l'une des revendications précédentes, **caractérisé en ce que** la première et la deuxième roue dentée (7a, 7b) sont montées sur la commande à manivelle (2).

8. Véhicule selon la revendication 7, comportant en outre une roue libre entre la commande à manivelle (2) et les première et deuxième roues dentées.

9. Véhicule selon l'une des revendications précédentes, **caractérisé en ce que** le mécanisme d'entraînement électrique (3) est disposé sur la commande à manivelle (2).

10. Procédé pour faire fonctionner un véhicule pouvant être actionné de manière motorisée et/ou par la force musculaire, notamment une bicyclette électrique, comprenant une commande à manivelle (2), un mécanisme d'entraînement électrique (3), une alimentation électrique (11), un mécanisme de changement de rapport (4) comprenant une première et une deuxième roue dentée (7a, 7b) ainsi qu'un dispositif d'assistance de transfert de chaîne (14), une chaîne (5) et une unité de commande (10) destinée à commander le mécanisme d'entraînement électrique (3), le dispositif d'assistance de transfert de chaîne (14) étant disposé sur l'une des roues dentées, comprenant les étapes suivantes :
- détection d'une intention de changement de rapport du conducteur et
- entraînement du mécanisme d'entraînement électrique (3) afin de déplacer la chaîne (5) de telle sorte que le dispositif d'assistance de transfert de chaîne (14) soit amené dans une position de changement de rapport dans laquelle un changement de rapport est assisté par le dispositif d'assistance de transfert de chaîne (14).
